# FASCICULE DE BREVET EUROPEEN

(11) **EP 2 420 052 B1**
(45) Date de publication et mention de la délivrance du brevet: **02.12.2015**
(21) Numéro de dépôt: 10723671.3
(22) Date de dépôt: 13.04.2010
(51) Int. Cl.: H04N 5/225

(54) **PROCÉDÉ ET SYSTÈME D'IMAGERIE ACTIVE Á CHAMP LARGE**
VERFAHREN UND SYSTEM ZUR AKTIVEN BILDGEBUNG MIT EINEM GROSSEN FELD
METHOD AND SYSTEM FOR ACTIVE IMAGING WITH A LARGE FIELD

(30) Priorité: 14.04.2009 FR 0952418
(43) Date de publication de la demande: 22.02.2012
(73) Titulaire: ONERA (Office National d'Etudes et de Recherches Aérospatiales), 92320 Châtillon (FR)
(72) Inventeur: HAMOIR, Dominique, F-31055 Toulouse (cedex 4) (FR)
(74) Mandataire: Gevers France
(86) Numéro de dépôt international: PCT/FR2010/050717
(87) Numéro de publication internationale: WO 2010/119225

(56) Documents cités:
- EP-A- 1 978 725
- WO-A-2004/071074
- WO-A-2006/085834
- DE-A1- 4 026 956

## Description

La présente invention concerne un procédé et un système d'imagerie utilisant un faisceau lumineux incident, comme un faisceau laser, émis par une source impulsionnelle, vers une zone observée couverte sensiblement par le champ de vision de la surface photosensible d'un capteur optronique.

Dans l'état de la technique, les systèmes d'imagerie active, dits aussi systèmes d'imagerie laser, à capteur matriciel, dit aussi matrice de détecteurs (en anglais "focal plane array"), sont essentiellement de trois types. Ils possèdent tous une source impulsionnelle de faisceau lumineux incident qui éclaire la zone observée à chaque impulsion du faisceau incident.

Un système d'imagerie actif mono-impulsionnel (flash 2D) à cadence vidéo comporte une source lumineuse, comme un laser à l'état solide à basse cadence, par exemple de type oscillateur paramétrique optique OPO. La zone observée est éclairée et imagée à chaque impulsion du faisceau incident, typiquement à une cadence de 10 Hz à 20 Hz. Les images traitées dans ce système subissent généralement un crénelage temporel, c'est-à-dire un filtrage temporel représentatif d'un filtrage spatial en profondeur.

Ce premier système est limité par la puissance moyenne d'émission des lasers à l'état solide à basse cadence qui ne progresse plus de façon significative. Cette limitation est d'autant plus forte lorsque la sécurité oculaire est requise. Celle-ci nécessite soit l'emploi d'un oscillateur paramétrique optique pour convertir la longueur d'onde de l'énergie émise généralement à 1 µm en des longueurs d'onde moins dangereuses, généralement comprises entre 1,5 µm et 2 µm, soit l'emploi de sources émettant directement à la longueur d'onde de 2 µm, moins matures que les sources émettant à la longueur d'onde de 1 µm.

Un système d'imagerie active du deuxième type comporte une source lumineuse pulsée présentant un meilleur compromis entre la puissance d'émission d'une part, et des contraintes industrielles telles que le coût, la consommation énergétique, la masse et l'encombrement de la source, d'autre part. La source dans un tel système émet à une cadence plus élevée, au-delà de 100 Hz. Il s'agit par exemple selon les applications d'une diode laser, d'un laser à fibre ou d'une diode électroluminescente. Ce système opère souvent à une cadence comprise entre 1 kHz et 100 kHz afin d'extraire le maximum de puissance lumineuse de la source. L'énergie lumineuse émise par impulsion étant alors relativement faible, ce système cumule numériquement les images associées à une série d'impulsions pour former l'image finale à présenter à un opérateur ou à un dispositif de traitement d'images.

Le système du deuxième type permet l'emploi d'une source lumineuse plus puissante que celle utilisée dans le système du premier type. Mais ce système du deuxième type ne gagne en rapport signal à bruit ou en surface éclairée utile que selon la racine carrée du nombre d'impulsions cumulées si l'image est lue à chaque impulsion du faisceau incident avant l'accumulation numérique d'images associées. Selon un critère de performance global représenté par le produit de la portée à la zone observée par le diamètre éclairé utile de la zone observée, le gain opérationnel obtenu est minime. De plus, les débits de données à traiter pour la lecture du capteur optronique ainsi que pour le prétraitement et l'accumulation des images sont excessifs. Enfin, le temps de pose effectif, correspondant à la durée totale nécessaire pour former une image de rapport signal à bruit suffisant, est très significativement plus long que pour le système du premier type, ce qui est une difficulté majeure dans certaines applications.

Le troisième type concerne un système d'imagerie active présentant un dispositif d'obturation rapide indépendant de la matrice de détecteurs, par exemple un dispositif à intensification de lumière. L'accumulation des images est réalisée analogiquement en accumulant des charges dans les photodétecteurs du capteur pendant toute une série d'impulsions du faisceau incident. Les charges accumulées dans le capteur ne sont donc lues qu'une fois par série d'impulsions en ouvrant et obturant le champ de la voie de réception en amont du capteur, par exemple au moyen d'un intensificateur.

Le système à accumulation analogique selon le troisième type gagne en rapport signal à bruit ou en surface éclairée utile selon la puissance d'émission moyenne de la source lumineuse. Selon le critère de performance global défini ci-dessus, le gain opérationnel varie selon la racine carrée de la puissance d'émission lumineuse. De plus, la cadence de lecture du capteur et le débit des données à traiter restent identiques à ceux pour un système du premier type. Néanmoins, cette technique est difficilement adaptable à tous les capteurs optroniques, en particulier aux capteurs à photodétecteurs à avalanche qui sont particulièrement prometteurs. De surcroît, le système du troisième type conduit comme le système du deuxième type à un temps de pause effectif long, qui rend le système plus sensible aux flous dus à la mobilité d'objets dans la zone observée ou du système lui-même, ou dus à de fortes turbulences atmosphériques, que l'imagerie active mono-impulsionnelle, sans possibilité de recalage efficace par traitement des images dans le cas d'un système du troisième type. En conditions atmosphériques ou sous-marines dégradées engendrant une forte diffusion du faisceau incident, les systèmes du deuxième et du troisième type sont également limités en cadence par le temps de propagation d'aller et retour de la lumière entre le système et la zone observée.

Aucun de ces trois types de système d'imagerie ne peut imager simultanément deux objets dans la zone observée dès lors qu'ils sont séparés d'une distance angulaire supérieure à la divergence du faisceau incident. De plus les performances de ces trois types de système d'imagerie sont réduites lorsqu'il s'agit d'imager simultanément deux objets dans la zone observée dès lors qu'ils sont séparés d'une distance en profondeur supérieure à la durée d'ouverture d'une porte temporelle d'intégration des charges des photodétecteurs dans le capteur, car le filtrage spatial par crénelage temporel devient moins efficace.

Dans ces trois types de système d'imagerie, les performances s'avèrent trop limitées pour répondre à certains besoins. Le champ accessible sur une seule image reste très faible en comparaison à l'étendue des zones à surveiller et en comparaison aux champs offerts par l'imagerie passive visible ou thermique. La portée n'est pas suffisamment plus grande que celle accessible en imagerie passive en conditions de ciel clair. Les systèmes du deuxième et du troisième type sont sensibles aux flous de la mobilité du système ou d'objets à observer.

Les documents WO-A-2004/071074, WO-A-2006/085834, EP-A-1978725 et DE-A-4026956 décrivent des exemples de systèmes d'imagerie active.

L'invention, qui est définie par les revendications ci-jointes, vise à pallier les inconvénients des systèmes d'imagerie connus et plus particulièrement à fournir un système d'imagerie offrant un rapport signal à bruit suffisamment élevé pour au moins une partie d'intérêt de la zone observée, y compris en conditions atmosphériques dégradées, une résolution spatiale élevée, et une plus grande insensibilité aux flous de mobilité.

A cette fin, un procédé d'imagerie selon lequel un faisceau incident est émis par une source lumineuse impulsionnelle vers une zone observée couverte sensiblement par le champ de vision de la surface photosensible d'un capteur optronique, est caractérisé en ce qu'il comprend une rétrodiffusion d'une impulsion du faisceau incident seulement par une portion de la zone observée, formant une tache de rétrodiffusion sur la surface photosensible, une déflexion d'impulsions du faisceau incident sur des portions respectives de la zone observée, et une acquisition d'imagettes correspondant à des taches de rétrodiffusion résultant de l'émission des impulsions du faisceau incident.

Selon l'invention, le faisceau incident a une section telle qu'il n'éclaire à chaque impulsion qu'une petite portion de la zone observée, bien que la zone observée soit comprise dans le champ de vision du capteur optronique. À portée constante, la surface éclairée utile par le faisceau incident dans un temps de réponse ou de rafraîchissement du système, typiquement 20 millisecondes à 1 seconde environ, est augmentée proportionnellement à la puissance lumineuse émise par la source, et non plus seulement suivant la racine carrée de la puissance comme pour un système d'imagerie du deuxième type. Ainsi, le critère de performance globale défini par le produit de la portée à la zone observée par le diamètre éclairé utile sur la zone observée est amélioré selon la racine carrée de la puissance lumineuse émise, et non seulement selon la racine quatrième de celle-ci.

Le débit de données lues à traiter demeure raisonnable, du même ordre de grandeur que dans un système d'imagerie du premier type qui présenterait la même puissance optique d'émission.

Compte tenu de l'éclairement d'une petite portion de la zone observée par une impulsion du faisceau incident, les problèmes de flous de mobilité et de signal rétrodiffusé sur des particules diffusantes ou sur des obstacles interposés entre le système d'imagerie et la zone observée sont écartés. Le capteur optronique peut comprendre des photodétecteurs à avalanche pleinement compatibles avec l'invention.

Le procédé d'imagerie selon l'invention peut être décliné selon différentes modalités, dont certaines sont décrites ci-dessous.

Soit (x, y, z) les axes d'un repère tridimensionnel lié à un système d'imagerie, (x, y) correspondant sensiblement au plan conjugué du plan du capteur par le système optique du système d'imagerie et (z) correspondant sensiblement à l'axe de visée du système d'imagerie. On notera dans la suite que la distance (la cote) z est équivalente au temps t selon la relation z = ct/2, c étant la vitesse de la lumière dans le milieu de propagation.

L'imagerie flash laser obtenue par le procédé de l'invention peut être notamment telle que :
- 2D) l'énergie lumineuse E(x, y) reçue par chaque pixel, pendant le temps d'intégration du capteur, typiquement 1 à 1000 ns, en réponse à l'impulsion émise est mesurée en fonction des cotes moyennes x et y du petit volume de l'espace imagé par chaque pixel ; le produit du mesurage est une image plane 2D ; ou
- 3D) la distance z(x, y) à une surface S produisant un "écho retour" est mesurée en fonction de x et y, et dans une réalisation préférée, l'énergie lumineuse E(x ,y, z) associée à cet "écho retour" est également mesurée en fonction de x, y et z, le produit du mesurage est un nuage de points 3D, la valeur de E étant idéalement affectée en attribut à chaque point retenu de l'écho retour; ou
- 4D) la puissance lumineuse instantanée P(x ,y ,z) reçue par chaque pixel du capteur en réponse à l'impulsion émise est mesurée en fonction de x, y et z; le produit du mesurage est une représentation volumique.

Dans des réalisations plus opérationnelles, l'imagerie flash laser obtenue par le procédé de l'invention peut être notamment telle que :
- 3D) la distance zi(x, y) à la surface Si produisant le ième "écho retour" est mesurée en fonction de x et y, et dans une réalisation préférée, l'énergie lumineuse E(x, y, zi) associée à cet "écho retour" est également mesurée en fonction de x, y et zi, avec 0≤ i ≤I et I généralement compris entre 1 et 10 ou parfois 1 et 20; le produit du mesurage est un nuage de points 3D, la valeur de E étant idéalement affectée en attribut à chaque point de l'écho retour;
- 4D) la puissance lumineuse instantanée P(x, y, zi) reçue par chaque pixel du capteur en réponse à l'impulsion émise est mesurée en fonction du temps et donc de z pendant une durée limitée T pour chaque point x, y, zi correspondant à un "écho retour" ; le produit du mesurage peut être vu soit comme une représentation volumique partielle, limitée aux régions de l'espace ayant produit les "échos retour" retenus, soit comme un nuage de points affectés des enregistrements P(z) en attribut.

Dans chacune de ces modalités, d'autres attributs physiques peuvent être mesurés seuls ou en complément, notamment des attributs indicatifs des réponses en polarisation, en fréquence, en fluorescence ou Doppler des surfaces imagées. La durée de chaque impulsion émise est le plus souvent de l'ordre de 1 à 10 ns dans le cas de l'imagerie flash laser 2D, et de 1 ns dans le cas de l'imagerie flash laser 3D ou 4D. La durée est de l'ordre de la picoseconde lorsque l'on souhaite accéder aux attributs relatifs à la fluorescence. L'impulsion est modulée à haute fréquence lorsque l'on souhaite accéder à l'information Doppler.

Dans une variante, il est possible de cumuler des impulsions sur une même imagette lorsque les conditions d'emploi du système d'imagerie sont par exemple telles que la portée est telle qu'un rapport signal à bruit resterait insuffisant sans ce cumul. Dans ce cas, le nombre d'impulsions requis reste très sensiblement inférieur au nombre d'impulsions qui aurait été requis selon l'état de la technique pour atteindre le même rapport signal à bruit.

Afin d'assurer une continuité d'éclairement entre des imagettes adjacentes dans l'image finale à reproduire et estomper les variations accentuées d'intensités lumineuses en bordure des imagettes, deux imagettes acquises correspondant à des taches de rétrodiffusion peuvent être géométriquement décalées l'une par rapport à l'autre. Le procédé peut comprendre un chevauchement partiel des taches de rétrodiffusion au moins deux à deux, un chevauchement partiel des imagettes au moins deux à deux et une combinaison au moins de deux imagettes adjacentes. La combinaison au moins de deux imagettes adjacentes peut consister en un recalage radiométrique desdites au moins deux imagettes adjacentes qui sera compris en termes d'intensité et de qualité du signal reçu par le système d'imagerie, c'est-à-dire en signal électrique et en compte numérique en sortie d'un capteur du système d'imagerie. Compte tenu d'une cadence élevée des impulsions du faisceau incident, par exemple de l'ordre de 10 kHz, le recalage de deux imagettes adjacentes peut n'intervenir par exemple qu'au moins toutes les 10 imagettes consécutives, ou toutes les lignes ou colonnes d'imagettes d'une matrice de photodétecteurs incluse dans le capteur.

Le procédé de l'invention peut comprendre une intégration de charges accumulées dans la surface photosensible pendant au moins la réception de chaque tache de rétrodiffusion par le capteur, une lecture des charges accumulées correspondant seulement à la tache de rétrodiffusion pour constituer une imagette, et une inactivité de la surface photosensible pendant au moins la diffusion de chaque impulsion du faisceau incident entre la source et la zone observée.

Dans une autre réalisation, de manière à éviter de détecter une rétrodiffusion parasite du faisceau incident, le procédé comprend des émissions d'impulsions du faisceau incident consécutives vers des portions de la zone observée qui ne sont pas contiguës pour produire des imagettes qui ne sont pas contiguës sur la surface photosensible. Ainsi par exemple les images de deux objets distincts dans la zone observée peuvent être composées alternativement à raison d'une imagette de l'un des objets, puis d'une imagette de l'autre objet. Selon un autre exemple, l'image d'un objet peut être composée alternativement à raison d'une imagette d'une ligne ou colonne d'une matrice de photodétecteurs incluse dans le capteur, puis d'une imagette d'une autre ligne ou colonne de la matrice non contiguë à la précédente. Dans cette réalisation, la cadence des impulsions du faisceau incident peut être accrue en recevant une tache de rétrodiffusion résultant de l'émission d'une impulsion de faisceau incident et en acquérant une imagette issue de la tâche de rétrodiffusion entre les émissions de deux impulsions de faisceau incident consécutives succédant à ladite une impulsion de faisceau incident.

L'impact des flous et distorsions de mobilité d'un objet dans la zone observée ou du système d'imagerie lui-même est encore plus atténué si les impulsions du faisceau incident émises sont défléchies vers des portions de la zone observée se chevauchant partiellement deux à deux et décrivant sensiblement une spirale, et sont rétrodiffusées en des taches correspondantes se chevauchant partiellement deux à deux et décrivant sensiblement une spirale sur la surface photosensible.

L'agilité angulaire du faisceau lumineux permet d'illuminer d'une impulsion à l'autre, ou d'une série d'impulsions à l'autre, des objets relativement espacés entre eux, éventuellement en n'illuminant pas les zones de l'espace situées entre ces objets. De plus, grâce au champ de vision de la surface photosensible du capteur optronique couvrant une zone observée nettement plus grande que la portion éclairée par une impulsion du faisceau incident, des objets relativement espacés entre eux, tant angulairement qu'en profondeur, restent dans le champ de vision angulaire du plan focal du capteur. Étant donné la réserve de puissance d'émission disponible, le procédé de l'invention permet de conduire à de l'imagerie active polarimétrique ou multi-spectrale. À cet égard, la fréquence et/ou la taille des imagettes peuvent être adaptées à des conditions et objectifs de vision. Ainsi, des imagettes correspondant à une sous-zone, telle qu'un objet, de la zone observée peuvent être acquises successivement de manière synchrone avec une fréquence d'impulsions de faisceau incident différente de celle d'imagettes d'une autre sous-zone, telle que le contexte entourant l'objet, de la zone observée. Les cadences de rafraîchissement des imagettes correspondant aux fréquences d'impulsions de faisceau incident différentes, ou plus généralement les cadences de rafraîchissement des imagettes d'une sous-zone de la zone observée à l'autre, peuvent être adaptées au cours du temps en fonction des besoins. Selon une variante, deux imagettes recouvertes par des taches de rétrodiffusion résultant de l'émission de deux impulsions du faisceau lumineux, ou plus généralement des imagettes de lignes ou de colonnes d'une matrice de photodétecteurs incluse dans le capteur peuvent avoir des tailles différentes. Selon d'autres variantes, une imagette peut couvrir une surface sensiblement plus grande que la tache de rétrodiffusion correspondante. Selon une autre variante, les sections du faisceau incident ou les énergies émises par impulsion pour deux impulsions peuvent être différentes.

L'invention donne ainsi l'opportunité d'accéder à un secteur angulaire réduit avec des rapports signal à bruit nettement plus élevés à très grande distance ce qui est intéressant en termes de compromis entre le rapport signal à bruit et une résolution spatiale pour des applications pour lesquelles la résolution spatiale est limitée par la diffraction, c'est-à-dire par la dimension maximale de l'optique de réception devant le capteur. Un meilleur rapport signal à bruit permet dans une certaine mesure de compenser la perte de résolution spatiale.

L'invention a aussi pour objet un système d'imagerie comprenant une source lumineuse impulsionnelle pour émettre un faisceau incident dirigé vers une zone observée et un capteur optronique ayant une surface photosensible avec un champ de vision apte à couvrir sensiblement la zone observée. Le système est caractérisé en ce qu'une impulsion du faisceau incident est apte à n'être rétrodiffusée que par une portion de la zone observée pour former une tache de rétrodiffusion sur la surface photosensible, et en ce qu'il comprend un moyen de déflexion pour défléchir des impulsions du faisceau incident sur des portions respectives de la zone observée, et un moyen d'acquisition pour acquérir des imagettes aptes à correspondre à des taches de rétrodiffusion résultant de l'émission des impulsions du faisceau incident.

Selon une première réalisation, le système peut comprendre un moyen pour intégrer des charges accumulées dans la surface photosensible pendant au moins la réception de chaque tache de rétrodiffusion par le capteur, un moyen pour lire des charges accumulées correspondant seulement à la tache de rétrodiffusion pour constituer une imagette, et un moyen pour maintenir inactive la surface photosensible pendant au moins la diffusion de chaque impulsion du faisceau incident entre la source et la zone observée.

Selon une deuxième réalisation, le système peut comprendre un moyen pour intégrer des charges accumulées dans la surface photosensible entre les émissions de deux impulsions de faisceau incident consécutives pour que le moyen d'acquisition soit apte à acquérir une imagette issue d'une tâche de rétrodiffusion résultant de l'émission d'une impulsion de faisceau incident précédant les deux impulsions de faisceau incident consécutives.

L'invention se rapporte encore à un programme d'ordinateur apte à être mis en oeuvre dans un système d'imagerie selon l'invention, ledit programme comprenant des instructions qui, lorsque le programme est exécuté dans ledit système d'imagerie, commandent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un système d'imagerie selon l'invention éclairant une portion de zone observée ;
- les figures 2, 3, 4 et 5 sont des vues de face de la surface photosensible d'un capteur optronique dans le système d'imagerie respectivement lorsqu'elle reçoit une tache de rétrodiffusion, elle transmet une imagette à traiter, elle reçoit successivement des taches de rétrodiffusion ligne par ligne, ou colonne par colonne, et elle transmet des imagettes à traiter ligne par ligne, ou colonne par colonne ;
- la figure 6 est un diagramme temporel d'impulsions de faisceau incident et de faisceau rétrodiffusé selon une première réalisation de l'invention ;
- la figure 7 montre des taches du faisceau rétrodiffusé reçues suivant une spirale sur la surface photosensible du capteur optronique ;
- la figure 8 est une vue de face de la surface photosensible ayant reçu des images de deux objets situés dans la zone observée par le système ;
- la figure 9 est une vue de face de la surface photosensible ayant reçu des images de trois objets situés dans la zone observée par cycle de trois taches de rétrodiffusion successives ; et
- la figure 10 est un diagramme temporel d'impulsions de faisceau incident et de faisceau rétrodiffusé selon une deuxième réalisation de l'invention.

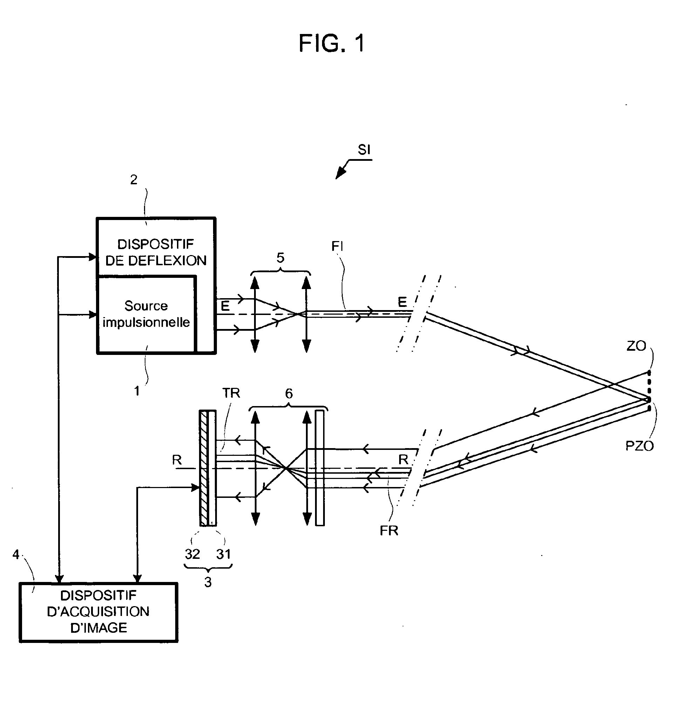

En référence à la figure 1, un système d'imagerie active SI selon une première réalisation de l'invention comprend une source lumineuse impulsionnelle 1 d'un faisceau incident FI dirigé vers une portion PZO d'une zone observée ZO, un dispositif programmable de déflexion de faisceau incident 2, un capteur optronique 3 orienté vers la zone observée et un dispositif d'acquisition d'image 4. Le système d'imagerie est par exemple fixe sur le sol ou embarqué dans un véhicule ou engin terrestre, aérien ou maritime. La portion sensiblement circulaire PZO de la zone observée est illuminée par le faisceau incident FI émis par la source 1 par exemple à travers un moyen de déflexion du faisceau dans le dispositif 2 et une optique de focalisation 5. Le capteur 3 a une face photosensible de photodétecteurs 31 positionnée sensiblement sur le plan focal d'une optique de filtrage et de focalisation 6 à travers laquelle le capteur présente un champ de vision couvrant sensiblement la zone observée ZO. La face photosensible 31 et la zone observée sont ainsi sensiblement conjuguées par l'optique 6. Une portion de la surface photosensible du capteur optronique, c'est-à-dire une partie des photodétecteurs composant le capteur optronique, n'est activée que par un faisceau FR issu de la rétrodiffusion du faisceau incident FI sur la portion illuminée PZO de la zone observée.

Dans la figure 1, le système d'imagerie SI est bistatique avec un axe optique d'émission EE entre la source lumineuse 1 et la zone observée ZO et un axe optique de réception RR entre la zone observée et le capteur optronique qui sont sensiblement parallèles puisque la distance entre le système d'imagerie et la zone observée est grande par rapport aux dimensions du système. Cependant en pratique, les axes optiques convergent vers la zone observée. Leur convergence peut être réglée en usine ou avant chaque utilisation du système d'imagerie. En variante, le système d'imagerie est monostatique avec des axes optiques qui sont fusionnés en un axe optique commun à travers un séparateur de faisceau.

La source impulsionnelle 1 du faisceau incident FI présente une puissance élevée avec une fréquence des émissions du faisceau incident élevée. Elle peut être un laser à l'état solide tel qu'un laser à fibre ou une diode laser, ou une diode électroluminescente, ayant une longueur d'onde d'émission comprise dans le proche infrarouge, entre 0,7 µm environ et 3 µm environ. Plus généralement, elle peut en fonction des conditions d'utilisation du système d'imagerie avoir une longueur d'onde dans les gammes d'ultraviolet, visible, proche-infrarouge ou térahertz, éventuellement infrarouge. Le faisceau incident FI n'illumine pas toute la zone observée ZO à chaque impulsion. La puissance d'émission de la source est concentrée à chaque impulsion sur une petite portion variable PZO de la zone observée de sorte que le rapport du signal rétrodiffusé et reçu par le capteur 3 sur le bruit soit suffisamment élevé pour acquérir une image avec une résolution spatiale élevée souhaitée.

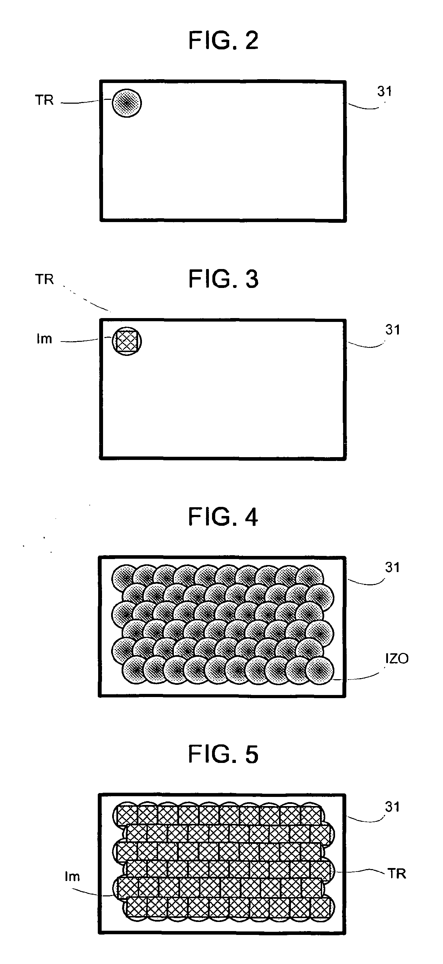

Le dispositif de déflexion 2 commande périodiquement une déflexion du faisceau lumineux incident FI vers une portion circulaire PZO de la zone observée ZO. Par exemple, comme montré à la figure 4, si la zone observée d'intérêt correspond à une image rectangulaire de surface quelque peu inférieure à la surface photosensible des photodétecteurs 31 du capteur 3, le faisceau incident est défléchi pas à pas ligne par ligne, par exemple de la gauche vers la droite et de haut en bas. Le pas de la déflexion est synchrone avec la périodicité des impulsions de commande d'émission du faisceau incident dans la source 1 et donc des tirs du faisceau incident. Le moyen de déflexion dans le dispositif 2 comprend en sortie du faisceau incident FI de la source 1 par exemple deux miroirs ou prismes tournants ou un déflecteur acousto-optique pour défléchir le faisceau incident FI vers une portion variable visée PZO de la zone observée.

Le capteur optronique 3 comprend des photodétecteurs 31 en face avant photosensible et un circuit de lecture 32 en face arrière. Les photodétecteurs sont par exemple disposés en une matrice carrée ou rectangulaire selon la réalisation illustrée aux figures 2 à 5. Par exemple, un photodétecteur est une photodiode qui génère un courant lorsqu'elle est exposée à un rayonnement infrarouge. Le circuit de lecture relié à ce photodétecteur est activé par une impulsion d'intégration d'un signal de commande produit par le dispositif d'acquisition d'image 4. Pendant l'impulsion d'intégration, comme pendant l'ouverture d'un diaphragme, un accumulateur électrique tel qu'un condensateur dans le circuit de lecture accumule une charge électrique. Le courant généré dépend notamment de l'intensité et de la longueur d'onde du rayonnement et de la durée d'exposition contrôlée par la largeur de l'impulsion d'intégration générée par le dispositif d'acquisition d'image 4. Au cours de l'acquisition progressive de l'image complète de la zone observée, imagette par imagette comme on le verra ci-après, tous les accumulateurs dans le circuit de lecture 32 sont déchargés et seulement les accumulateurs associés aux photodétecteurs de la portion de la surface photosensible du capteur optronique 3 qui reçoivent une tache de rétrodiffusion TR sont adressés à la fin de l'impulsion d'intégration correspondante, en réponse à une impulsion de faisceau incident. Les charges accumulées dans les accumulateurs adressés sont seulement lues et intégrées à la fin de l'impulsion d'intégration et donc après la fin de l'exposition à la tâche de rétrodiffusion reçue pour constituer une imagette qui est mémorisée dans le dispositif d'acquisition d'image 4. Chaque imagette est préférentiellement lue consécutivement à son illumination.

Typiquement, le système d'imagerie SI de l'invention présente une résolution spatiale si élevée qu'une portion PZO de la zone observée éclairée par le faisceau lumineux incident FI, de l'ordre de quelques dizaines de centimètres à quelques mètres de diamètre selon la puissance de la source 1 et la portée, corresponde à une tache de faisceau rétrodiffusé TR de l'ordre de quelques dizaines à quelques centaines de photodétecteurs sur la surface photosensible du capteur 3. Dans la suite de la description, la tache de rétrodiffusion TR correspondant à la portion PZO éclairée par le faisceau incident FI est considérée par exemple comme une petite image sensiblement circulaire sur la surface photosensible du capteur, comme montré à la figure 2. L'image réellement acquise par le dispositif d'acquisition d'image 4 est schématisée par une "imagette" Im qui est idéalement sensiblement concentrique avec et recouvre sensiblement la tache de rétrodiffusion circulaire TR, comme montré à la figure 3. L'imagette peut avoir un contour polygonal, circulaire ou elliptique. En général, le contour de l'imagette est similaire à celui de la surface photosensible 31 du capteur et est par exemple rectangulaire, carré ou hexagonal pour un capteur rectangulaire comprenant une matrice de photodétecteurs, comme montré aux figures 2 à 5. Typiquement, l'imagette est définie par une surface photosensible de 10×10 à 30x30 éléments photosensibles, appelés pixels, constitués par des photodétecteurs du capteur. La tache circulaire TR du faisceau rétrodiffusé est presque entièrement recouverte par l'imagette Im afin de récupérer une plus grande énergie lumineuse du faisceau rétrodiffusé, de faciliter les recalages et de s'affranchir d'éventuelles instabilités ou imprécisions de pointage des impulsions émises. Par exemple, le recouvrement est d'au moins 60 % environ. Au minimum, une tache de rétrodiffusion TR recouvre quelques pixels, par exemple au moins deux pixels, et une imagette Im recouvre au moins quatre pixels parmi l'ensemble des pixels de la matrice. Dans un mode préféré de réalisation, les imagettes adjacentes se recouvrent partiellement deux à deux pour faciliter les recalages. Idéalement, des pixels de plusieurs lignes, ou de plusieurs colonnes, sont communs aux deux imagettes adjacentes.

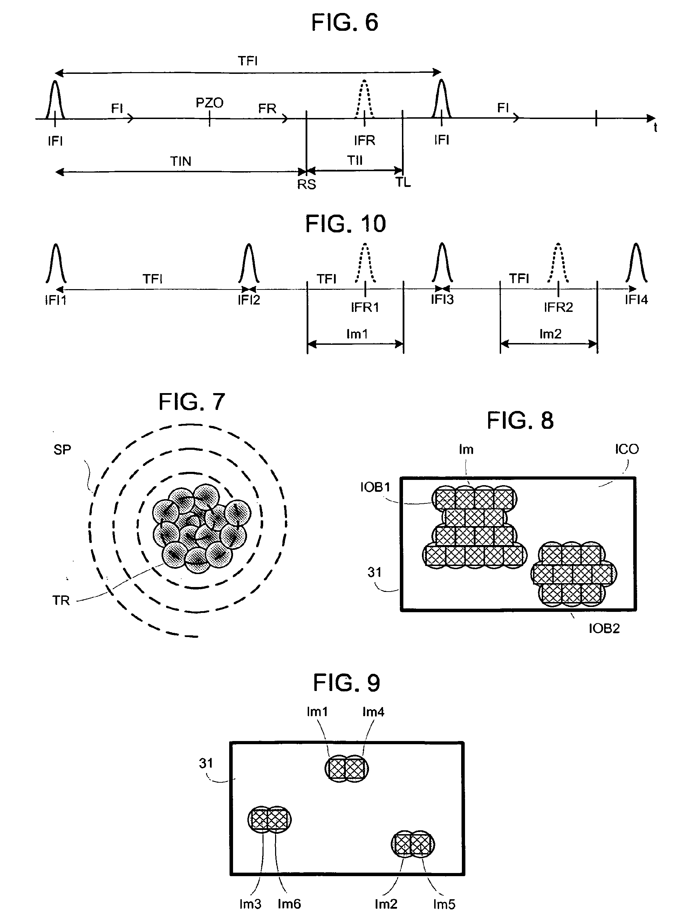

Dans le dispositif d'acquisition d'image 4 selon la première réalisation, un circuit de commande du circuit de lecture 32 du capteur optronique produit des impulsions d'intégration dont la durée d'intégration TII recouvre la durée de réception de l'éclair constitué par une impulsion du faisceau rétrodiffusé FR sans recouvrir la durée de propagation d'une impulsion du faisceau incident entre la source 1 et la zone observée ZO. Ces conditions évitent que le capteur 3 capte des images parasites résultant de la rétrodiffusion partielle du faisceau incident FI par des obstacles notamment latéraux situés entre la source 1 et la zone observée ZO, tout en assurant une récupération optimale de l'énergie du faisceau FR rétrodiffusé par une portion PZO de la zone observée. Par exemple, les obstacles sont des particules diffusantes ou des branches d'un arbre devant une scène observée. Comme montré à la figure 6, les impulsions d'intégration sont synchrones avec les impulsions de commande d'émission IFI du faisceau incident FI. La largeur TL-RS des impulsions d'intégration est comprise entre un instant d'initialisation RS et un instant de lecture TL à chaque période d'émission. L'instant d'initialisation RS au début de l'impulsion d'intégration précède la réception de l'impulsion IFR du faisceau rétrodiffusé et correspond à une remise à zéro de la charge d'accumulateurs dans le circuit de lecture 32 du capteur 3. L'instant de lecture TL à la fin de l'impulsion d'intégration succède à la réception de l'impulsion IFR du faisceau rétrodiffusé et correspond à une lecture des charges d'accumulateurs du circuit de lecture associée à une imagette correspondant à la tache de rétrodiffusion reçue TR. La durée de l'impulsion d'intégration est réglable et dépend de la profondeur de champ souhaitée. Périodiquement entre les émissions de deux impulsions IFI du faisceau incident FI, tous les photodétecteurs et tous les accumulateurs dans le capteur 3 sont inactifs pendant une durée TIN, comme pendant la fermeture d'un diaphragme, incluant au moins la diffusion d'une impulsion du faisceau incident entre la source 1 et la zone observée ZO.

Alternativement, seule une partie desdits photodétecteurs, incluant au minimum les photodétecteurs coïncidant avec l'imagette qui sera lue, est rendue inactive pendant une durée TIN. Des imagettes successives peuvent éventuellement être acquises de manière synchrone avec un certain degré d'entrelacement temporel, c'est-à-dire avec une lecture d'une imagette après l'émission d'une impulsion du faisceau incident correspondant à une imagette suivante, et éventuellement avec des durées d'inactivité TIN distinctes d'une imagette à la suivante, tout particulièrement lorsque ces imagettes sont relativement éloignées les unes par rapport aux autres sur le capteur 3. De telles imagettes peuvent contribuer à imager des zones d'une scène observée et/ou des objets de la scène distincts.

A chaque tir du faisceau incident FI, le dispositif d'acquisition d'image 4 acquiert et mémorise une imagette Im correspondant à une tache de rétrodiffusion TR. Quand au plus toute la zone observée ZO a été balayée par le faisceau incident FI en éclairant successivement des portions PZO de la zone observée ZO couvertes par le champ de vision du capteur 3, le capteur a reçu une multitude de taches de rétrodiffusion TR se chevauchant en bordure deux à deux, comme représentée à la figure 4. Le dispositif 4 a acquis sur les taches reçues une multitude d'imagettes Im qui sont superposées partiellement en bordure les unes sur les autres et qui constituent après traitement une image finale de la zone observée, comme représenté à la figure 5. Le système SI présente ainsi un champ de détection très étendu comparativement au diamètre instantané de la tache lumineuse de rétrodiffusion TR. Chaque image et ses attributs, avec ou sans prétraitement, peuvent être lus et présentés automatiquement à un système de décision, ou sur un écran du dispositif 4, à un opérateur. Le système de décision peut être purement automatique ou inclure un opérateur dans la boucle.

En considérant dans cette première réalisation que le champ de vision du capteur 3 reste orienté fixement en direction de la zone observée ZO, ou en considérant que le système SI poursuit une cible avec un moyen de poursuite dont la fréquence maximale de réaction est sensiblement inférieure à la fréquence des impulsions du faisceau incident FI, le dispositif d'acquisition d'image 4 considère que les imagettes Im sont reçues consécutivement dans un repère fixe. Comme représenté à la figure 5, les imagettes Im se chevauchent partiellement les unes sur les autres au moins deux à deux afin d'assurer une continuité de l'image finale de la zone observée pendant la durée d'acquisition de toutes les imagettes composant l'image finale. Alternativement, les imagettes peuvent ne pas se chevaucher, notamment si le nombre d'imagettes requis pour imager la zone d'observation est réduit, particulièrement si les distorsions d'images susceptibles d'être induites par les mouvements des objets à observer et/ou du porteur du système SI pendant la durée d'acquisition de l'image restent négligeables. La durée d'acquisition de l'image finale est sensiblement égale au produit du nombre de taches de rétrodiffusion reçues ou d'imagettes par la période TFI des impulsions IFI de faisceau incident. Le repère fixe confère un auto-référencement géométrique des imagettes consécutives les unes par rapport aux autres sur un certain nombre d'imagettes, par exemple par fraction des lignes de l'image finale, et évitent ainsi un recalage géométrique pour ce nombre d'imagettes. Plus précisément, le recalage géométrique de deux imagettes traitées dans le dispositif d'acquisition d'image 4 correspond à un décalage "radiométrique" qui dépend du niveau du signal reçu par le capteur optronique 3 et de la qualité du signal électrique fourni par le capteur et qui est causé par les gradients opposés d'intensités lumineuses gaussiennes en périphérie de deux taches de rétrodiffusion consécutives se chevauchant et donc des bordures se chevauchant de deux imagettes adjacentes. Par exemple, le dispositif d'acquisition d'image moyenne sensiblement des intensités lumineuses périphériques dans les parties se chevauchant, ou recourt à des recalages connus pour images vidéo reposant sur des similarités et des interpolations par lissage et/ou artefacts dans les bordures superposées de deux imagettes adjacentes. Le chevauchement partiel entre imagettes améliore le rapport signal à bruit effectif en bordure de la portion de zone observée illuminée PZO et permet d'espacer un peu plus les centroïdes des faisceaux lumineux incidents émis successivement dans le domaine angulaire. Il en résulte la possibilité d'augmenter sensiblement la dimension de chaque imagette. Le repère fixe contribue à gagner en stabilité de la ligne de visée et permet de balayer très rapidement la zone observée par les impulsions du faisceau incident pour adresser à volonté toute zone du champ de vision.

De ce qui précède, les recalages géométriques entre deux imagettes consécutives sont en principe inutiles étant donné la fréquence élevée des impulsions du faisceau incident et de l'acquisition des imagettes. Cependant, au moins des recalages entre deux lignes ou colonnes consécutives d'imagettes sont traitées systématiquement dans le dispositif d'acquisition d'image 4 afin de limiter les distorsions d'image.

Selon une autre réalisation montrée à la figure 7, le dispositif de déflexion 2 commande dans la source 1 une émission d'impulsions de faisceau incident IFI défléchies suivant un balayage décrivant une illumination sensiblement en spirale sur la zone observée ZO et rétrodiffusées en des taches correspondantes TR se chevauchant partiellement deux à deux et décrivant sensiblement une spirale SP sur la surface photosensible 31, de préférence en commençant par le centre de la spirale SP et en terminant par la périphérie de celle-ci. La lecture des imagettes successives correspondant aux taches de rétrodiffusion se chevauchant en spirale donne une excellente qualité de l'image finale particulièrement au centre de celle-ci. Tout flou dû à la mobilité d'un objet centré sensiblement sur la spirale décrite par le faisceau incident sur la zone observée est atténué par l'acquisition des imagettes suivant la spirale. Par exemple une dizaine d'imagettes au centre de la spirale permet au dispositif d'acquisition d'image 4 d'acquérir l'image de l'objet. Les imagettes en périphérie acquises après les imagettes centrales de la spirale SP sensiblement centrée sur l'image de l'objet peuvent nécessiter un plus faible rapport signal à bruit ; à cet égard, les taches de rétrodiffusion et les imagettes correspondantes peuvent moins se chevaucher, les imagettes périphériques ne reflétant que le contexte de l'objet.

En variante, seulement les imagettes dans une région centrale de la spirale SP incluant l'image de l'objet sont rafraîchies avec une fréquence élevée d'impulsions de faisceau incident et les imagettes périphériques de la spirale SP ne sont rafraîchies que dans un mode de veille avec une fréquence d'impulsions de faisceau incident beaucoup plus faible que la fréquence d'acquisition des imagettes de la région centrale. Le pas entre deux imagettes consécutives peut progressivement ou pas à pas augmenter vers la périphérie, par exemple à l'extérieur des deux premières ou des trois premières petites spires centrales de la spirale.

Selon une autre variante visant à réduire le nombre d'imagettes particulièrement autour de l'image d'un objet, les dimensions des imagettes sont agrandies progressivement ou pas à pas depuis une zone centrale contenant quelques spires vers la périphérie de la spirale, sans agrandir la section du faisceau incident et donc les taches de rétrodiffusion, mais simplement en éloignant leurs centroïdes.

Selon encore une autre variante, la section du faisceau incident est élargie progressivement ou pas à pas depuis une zone centrale contenant quelques spires vers la périphérie de la spirale, tout en agrandissant les tailles des imagettes correspondantes dans des proportions similaires.

Selon une autre variante plus complète, deux ou plusieurs des variantes précédentes relatives à la spirale SP sont combinées.

Selon une autre variante, la section du faisceau incident et l'espacement entre les centroïdes des imagettes peuvent ensemble ou séparément être des fonctions décroissantes du rapport signal à bruit souhaité, de la distance à l'objet ou de la densité d'énergie par unité de surface et par impulsion nécessaire pour atteindre un rapport signal à bruit désiré, de sorte à adapter le compromis entre le rapport signal à bruit et le champ utile éclairé en fonction des conditions d'observation et des besoins opérationnels. Ces réglages dynamiques peuvent s'accompagner d'une adaptation de la densité de puissance lumineuse émise, voire de la puissance lumineuse totale émise, conduisant à une optimisation de la consommation énergétique du système d'imagerie, de la furtivité et des risques liés à l'exposition au rayonnement lumineux.

Le dispositif de déflexion 2 peut être programmé par un opérateur pour balayer la zone observée ZO, ou une ou plusieurs parties d'intérêt de la zone observée suivant un balayage configuré dynamiquement de manière à améliorer le rapport signal à bruit et/ou la portée sur une partie prédéterminée observée, momentanément ou de façon plus prolongée. Le champ illuminé et lu est ainsi adaptable dynamiquement tant en pointage de faisceau incident qu'en section de faisceau, en énergie par impulsion ou en balayage à une partie de la zone observée. Ceci permet de régler les divers paramètres du système d'imagerie en fonction de la portée, des conditions atmosphériques ou sous-marines, des dimensions et formes et caractéristiques notamment de réflectance d'une partie de la zone observée, par exemple incluant un objet d'intérêt.

Ces diverses adaptations donnent la possibilité d'acquérir l'image d'un objet particulier ou les images de plusieurs objets particuliers situés dans la zone observée ZO, même lorsque la puissance lumineuse reste insuffisante pour que tout le champ de vision puisse être éclairé. Selon l'exemple montré à la figure 8, les images IOB1 et IOB2 de deux objets distincts inclus dans la zone observée sont seulement acquises par le dispositif 4, par exemple par illumination d'impulsions consécutives du faisceau incident FI d'un objet à l'autre, ou d'une série d'impulsions respectivement pour les objets, sans illumination de parties de la zone observée situées entre ces objets, ou par lecture sélective des charges de photodétecteurs dans le capteur 3 associés seulement aux imagettes correspondant aux objets. Les acquisitions des images des objets sont indépendantes les unes des autres, c'est-à-dire les objets peuvent être illuminés à des distances angulaires et/ou en profondeur différentes et leurs images sont acquises à des instants de lecture distincts.

Dans une variante, la matrice de photodétecteurs peut être décomposée en secteurs, par exemple en moitiés ou en quarts, dont les adressages électroniques en polarisation et lecture sont indépendants. L'ensemble électronique de commande du système d'imagerie est adapté pour que l'information enregistrée par l'un des secteurs de la matrice de photodétecteurs soit transmise de façon totalement indépendante après ou de façon asynchrone de la réception d'une tache de rétrodiffusion ultérieure correspondant à un autre secteur.

En variante, le dispositif de déflexion 2 commande continûment la déflexion du faisceau lumineux incident FI, sans que soit modifiée la commande de la charge et de la décharge des accumulateurs par les impulsions d'intégration.

Selon une autre variante, le dispositif de déflexion 2 commande périodiquement la déflexion du faisceau incident FI tantôt d'un pas, tantôt continûment. Par exemple, le dispositif de déflexion 2 est stable pendant au moins l'émission d'une impulsion du faisceau incident FI et est préparé pour défléchir le faisceau incident pendant le reste de la période. Le réglage du fonctionnement du dispositif de déflexion peut dépendre de conditions opérationnelles et environnementales de la zone observée.

Grâce à la présence d'un dispositif de déflexion 2 défléchissant des impulsions du faisceau incident FI, et dans les limites des performances de celui-ci, l'harmonisation mécanique des voies d'émission et de réception ne nécessite pas une précision au pixel ou sous-pixel, même dans le cas d'imagettes limitées à quelques pixels. En effet, l'invention permet de réaliser une harmonisation logicielle automatique, ou selon le cas semi-automatique, en cours de mission. Dans un mode de réalisation préféré, un algorithme commande notamment le dispositif de déflexion et calcule les positions des centroïdes des taches de rétrodiffusion effectivement formées sur la surface photosensible du capteur optronique 3. Cet algorithme ajuste le signal de commande du dispositif de déflexion 2 de sorte à recentrer les taches de rétrodiffusion ultérieures sur les imagettes correspondantes. Inversement, l'algorithme commande notamment le dispositif d'acquisition d'image 4 et recentre les imagettes ultérieures sur les taches de rétrodiffusion correspondantes. Ces ajustements peuvent être faits avant et/ou périodiquement pendant l'emploi du système d'imagerie, typiquement une fois à chaque mise en route du système, mais éventuellement à chaque rafraîchissement des données si les particularités d'emploi du système le justifient.

Selon encore une autre réalisation qui peut être combinée avec les variantes précédentes, on s'affranchit de l'acquisition d'images parasites produites par la rétrodiffusion sur des obstacles diffus ou denses situés entre la source 1 et chaque objet d'intérêt en commandant par le dispositif de déflexion 2 des émissions consécutives de faisceau incident sur des portions de la zone observée ZO qui ne sont pas contiguës deux à deux. Par exemple, comme représenté à la figure 9, des imagettes Im1, Im2, Im3, Im4, Im5 et Im6 traitées successivement suivant cet ordre correspondent à trois paires de portions distinctes et bien séparées sur la zone d'observation ZO et à des taches de rétrodiffusion TR disposées respectivement à trois endroits distincts et bien séparés sur la surface photosensible 31 du capteur 3 et résultant de l'émission de six impulsions de faisceau incident consécutives. Les imagettes Im1 et Im4, Im2 et Im5, et Im3 et Im6 composent respectivement les images par exemple de trois objets d'intérêt.

Comparativement à la figure 6 selon laquelle une deuxième impulsion de faisceau incident IFI succède à une impulsion d'intégration de durée TTI pour accumuler des charges de la tache de rétrodiffusion correspondant à une première impulsion de faisceau incident précédente, la période TFI des impulsions du faisceau incident FI selon la deuxième réalisation peut être avantageusement plus courte, comme représenté à la figure 10. Dans cette figure, on a supposé que la période des impulsions de faisceau incident était égale à la demi-période des impulsions de faisceau incident selon la figure 6. Par exemple, l'imagette Im2 issue d'une tâche de rétrodiffusion résultant de l'émission d'une deuxième impulsion de faisceau incident IFI2 succède, et non précède, l'émission d'une troisième impulsion de faisceau incident IFI3 succédant à l'impulsion IFI2. La largeur TII d'une impulsion d'intégration est comprise entre les émissions de deux impulsions successives du faisceau incident sans prendre la précaution qu'une partie de l'impulsion d'intégration intervienne pendant la diffusion d'une impulsion entre la source 1 et la zone observée ZO.

Dans le cas de plusieurs objets, par exemple de deux objets en référence à la figure 8, une imagette de l'image d'objet IOB1 est d'abord acquise, puis une imagette de l'image d'objet IOB2 est ensuite acquise, et ainsi de suite alternativement d'une image à l'autre. Plus généralement, la surface photosensible du capteur 3 est divisée en plusieurs parties regroupant des imagettes en nombres a priori différents, les imagettes étant lues l'une après l'autre à raison d'une imagette par partie pendant un cycle de lecture de l'image finale. Lorsque l'image d'un objet contient de nombreuses imagettes, comme l'image IOB1, par exemple une imagette d'une ligne est lue, puis une imagette dans une ligne non consécutive à la précédente est lue, et ainsi de suite.

Les fréquences de balayage de sous-zones incluses dans la zone observée ZO et donc les fréquences de lecture de parties photosensibles du capteur 3 peuvent être différentes en fonction de l'intérêt des sous-zones et de la mobilité d'objets contenus dans les sous-zones. Par exemple dans la figure 8, l'image d'objet IOB1 contenant un objet fixe par rapport au champ de vue total du système d'imagerie n'est rafraîchie que tous les trois rafraîchissements de l'image d'objet IOB2 contenant un objet mobile par rapport audit champ de vue, et l'image restante ICO relative au contexte environnant les objets ayant les images IOB1 et IOB2 n'est rafraîchie que tous les 10 rafraîchissements de l'image d'objet IOB2. L'image IOB2 contenant l'objet mobile à l'intérieur du champ de vue total du système d'imagerie est poursuivie par le dispositif de déflexion 2 sous la commande du dispositif d'acquisition d'image 4 par exemple en poursuivant le barycentre de l'objet mobile ou un point "chaud" d'intensité lumineuse élevée de l'objet mobile. La puissance d'émission de la source 1 est ainsi mieux répartie sur les sous-zones de plus grand intérêt.

Ainsi la matrice de détection peut poursuivre un objet fixe ou asservir sa ligne de visée sur des coordonnées prédéterminées d'un point du sol et imager également, en les poursuivant dans le champ de vue du système, des objets mobiles présents dans la zone observée ZO.

Plus généralement, la matrice de détection peut poursuivre un point de référence correspondant à un objet de référence fixe ou mobile, à des coordonnées géographiques ou à une trajectoire fictive. La zone observée ZO peut ainsi se déplacer de façon continue ou séquentielle au cours du temps, le système d'imagerie pouvant lui-même être en mouvement. Un ou plusieurs objets d'intérêt, en mouvement relatif ou non par rapport au point poursuivi, peuvent être imagés. En fonction de besoins opérationnels qui peuvent évoluer dans le temps, un ou plusieurs de ces objets d'intérêt peuvent bénéficier d'un rafraîchissement d'image plus fréquent que les autres objets d'intérêt présents dans la zone observée et/ou d'une poursuite à l'intérieur du champ de vue total du système d'imagerie active. L'objet de référence éventuel, plus généralement le point de référence fixe ou mobile, peut selon les besoins ne pas être lui-même imagé par le système d'imagerie active. La poursuite peut être alors asservie sur des coordonnées ou sur une trajectoire fournies par un système de niveau supérieur, par exemple sur une voie d'imagerie passive ou sur une voie radar d'un système de niveau supérieur.

Selon une autre variante, l'énergie émise par impulsion du faisceau incident FI est variable. Par exemple, des imagettes dans une zone centrale de la spirale SP montrée à la figure 7 sont capturées à la suite d'un faisceau incident ayant une puissance d'émission plus élevée que celle du faisceau incident utilisé pour la capture des imagettes à la périphérie de la spirale.

Le système d'imagerie SI peut opérer de jour comme de nuit. Il peut fonctionner en mode passif de veille lorsque la source impulsionnelle de faisceau incident 1 n'est pas activée et la zone observée ZO est éclairée par la lumière naturelle ou une source de lumière artificielle pour laquelle le capteur 3 est photosensible. Ainsi dans le système d'imagerie, l'image captée peut résulter au moins partiellement d'un fonctionnement en mode passif. La source impulsionnelle de faisceau incident 1 générant l'illumination propre au système n'est activée que si des conditions le requièrent et l'activation de la source peut être limitée à des sous-zones de la zone observée ZO dont le rapport signal à bruit est insuffisant. En se référant à la figure 8, l'image de contexte ICO peut être captée en mode passif de veille, tandis que les images d'objet IOB1, IOB2 peuvent être captées en mode actif avec un balayage du faisceau incident selon l'invention.

Il apparaît des diverses réalisations et variantes précédentes que le système d'imagerie selon l'invention offre une plus grande sécurité oculaire tout en assurant une furtivité plus élevée grâce à la réduction de la puissance d'émission de faisceau incident, comparativement aux systèmes d'imagerie selon la technique antérieure.

L'invention décrite ici concerne un procédé d'imagerie et un système d'imagerie. Selon une implémentation, les étapes du procédé de l'invention sont déterminées par les instructions d'un programme d'ordinateur incorporé dans le système. Le programme comporte des instructions qui, lorsque ledit programme est exécuté dans un processeur du système dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme.

## Revendications

1. Procédé d'imagerie selon lequel des impulsions d'un faisceau incident (FI) sont émises par une source lumineuse impulsionnelle (1) vers une zone observée (ZO) couverte sensiblement par le champ de vision de la surface photosensible (31) d'un capteur optronique (3), le procédé comprenant, pour chaque impulsion du faisceau incident, - une déflexion de l'impulsion vers une portion respective (PZO) de la zone observée, - une rétrodiffusion de l'impulsion par la portion respective de la zone observée, formant une tache de rétrodiffusion respective (TR) sur la surface photosensible (31), -une intégration (TTI) de charges accumulées dans une portion de la surface photosensible (31) exposée à la tache de rétrodiffusion respective pendant au moins une durée de réception de la tache de rétrodiffusion respective (TR) par le capteur (3), ladite durée de réception étant comprise entre les émissions de deux impulsions successives du faisceau incident, - une acquisition d'une imagette respective (Im) correspondant à ladite tache de rétrodiffusion respective résultant de l'émission de l'impulsion en fonction des charges accumulées, et -un maintien d'une inactivité (TIN) de la surface photosensible pendant au moins la diffusion de chaque impulsion entre la source (1) et la zone observée (ZO).

2. Procédé conforme à la revendication 1, selon lequel deux imagettes acquises (Im) correspondant à des taches de rétrodiffusion (TR) sont géométriquement décalées l'une par rapport à l'autre.

3. Procédé conforme à la revendication 1 ou 2, comprenant un chevauchement partiel des taches de rétrodiffusion (TR) au moins deux à deux, un chevauchement partiel des imagettes (Im) au moins deux à deux et une combinaison au moins de deux imagettes adjacentes.

4. Procédé conforme à l'une quelconque des revendications 1 à 3, comprenant un recalage au moins de deux imagettes adjacentes (Im).

5. Procédé conforme à l'une quelconque des revendications 1 à 4, comprenant des émissions d'impulsions du faisceau incident consécutives vers des portions de la zone observée (ZO) qui ne sont pas contiguës pour acquérir des imagettes (Im1, Im2) qui ne sont pas contiguës sur la surface photosensible (31).

6. Procédé conforme à l'une quelconque des revendications 1 à 5, comprenant une émission d'impulsions (IFI) du faisceau incident qui sont défléchies vers des portions de la zone observée (ZO) se chevauchant partiellement deux à deux et décrivant sensiblement une spirale, et qui sont rétrodiffusées en des taches respectives (TR) se chevauchant partiellement deux à deux et décrivant sensiblement une spirale (SP) sur la surface photosensible (31).

7. Procédé conforme à l'une quelconque des revendications 1 à 6, selon lequel des imagettes (Im) correspondant à une sous-zone de la zone observée (ZO) sont acquises avec une fréquence d'impulsions de faisceau incident différente de celle à laquelle des imagettes d'une autre sous-zone de la zone observée (ZO) sont acquises.

8. Procédé conforme à l'une quelconque des revendications 1 à 7, selon lequel deux imagettes ont des tailles différentes.

9. Procédé conforme à l'une quelconque des revendications 1 à 8, selon lequel une imagette couvre une surface sensiblement plus grande que la tache de rétrodiffusion correspondante.

10. Procédé conforme à l'une quelconque des revendications 1 à 9, selon lequel les sections du faisceau incident (FI) pour deux impulsions (IFI) sont différentes.

11. Procédé conforme à l'une quelconque des revendications 1 à 10, selon lequel les énergies émises par impulsion pour deux impulsions (IFI) sont différentes.

12. Procédé conforme à l'une quelconque des revendications 1 à 11, comprenant un recentrage de taches de rétrodiffusion sur des imagettes, ou un recentrage d'imagettes sur des taches de rétrodiffusion.

13. Système d'imagerie comprenant une source lumineuse impulsionnelle (1) pour émettre des impulsions d'un faisceau incident (FI) dirigé vers une zone observée (ZO) et un capteur optronique (3) ayant une surface photosensible (31) avec un champ de vision apte à couvrir sensiblement la zone observée, le système comprenant, pour chaque impulsion du faisceau incident apte à n'être rétrodiffusée que par une portion respective (PZO) de la zone observée pour former une tache de rétrodiffusion respective (TR) sur la surface photosensible (31), -un moyen de déflexion (2) pour défléchir l'impulsion sur la portion respective de la zone observée, -un moyen d'intégration (32, 4, TII) pour intégrer les charges accumulées dans une portion de la surface photosensible (31) exposée à la tache de rétrodiffusion respective pendant au moins une durée de réception de la tache de rétrodiffusion respective (TR) par le capteur (3), ladite durée de réception étant comprise entre les émissions de deux impulsions successives du faisceau incident, -un moyen d'acquisition (32, 4, TL) pour acquérir une imagette respective (Im) correspondant à ladite tache de rétrodiffusion respective résultant de l'émission de l'impulsion en fonction des charges accumulées, et -un moyen (32, 4, TIN) pour maintenir inactive la surface photosensible pendant au moins la diffusion de chaque impulsion entre la source (1) et la zone observée (ZO).

14. Système conforme à la revendication 13, dans lequel la source lumineuse (1) est un laser à fibre.

15. Système conforme à l'une des revendications 13 ou 14, selon lequel la source lumineuse (1) a une longueur d'onde d'émission comprise entre 0,7 µm environ et 3 µm environ.

16. Programme d'ordinateur apte à être mis en oeuvre dans un système d'imagerie (SI) comprenant une source lumineuse impulsionnelle (1) pour émettre des impulsions d'un faisceau incident (FI) dirigé vers une zone observée (ZO) et un capteur optronique (3) ayant une surface photosensible (31) avec un champ de vision apte à couvrir sensiblement la zone observée, ledit programme comprenant des instructions qui, lorsque le programme est exécuté dans le système d'imagerie, commandent pour chaque impulsion du faisceau incident apte à n'être rétrodiffusée que par une portion respective (PZO) de la zone observée pour former une tache de rétrodiffusion respective (TR) sur la surface photosensible (31), -une déflexion de l'impulsion vers une portion respective (PZO) de la zone observée, -une intégration (TTI) de charges accumulées dans une portion de la surface photosensible (31) exposée à la tache de rétrodiffusion respective pendant au moins une durée de réception de la tache de rétrodiffusion respective (TR) par le capteur (3), ladite durée de réception étant comprise entre les émissions de deux impulsions successives du faisceau incident, -une acquisition d'une imagette respective (Im) correspondant à ladite tache de rétrodiffusion respective résultant de l'émission de l'impulsion en fonction des charges accumulées, et -une inactivité (TIN) de la surface photosensible pendant au moins la diffusion de chaque impulsion entre la source (1) et la zone observée (ZO).

## Patentansprüche

1. Bildgebungsverfahren, wobei Impulse eines einfallenden Strahls (FI) von einer Impulslichtquelle (1) an eine Beobachtungszone (ZO) gesendet werden, die etwa von dem Blickfeld der photosensiblen Fläche (31) eines Optroniksensors (3) bedeckt ist, wobei das Verfahren für jeden Impuls des einfallenden Strahls umfasst:
- eine Ablenkung des Impulses zu einem jeweiligen Abschnitt (PZO) der Beobachtungszone,
- eine Rückstreuung des Impulses durch den jeweiligen Abschnitt der Beobachtungszone, wobei ein jeweiliger Rückstreuungsfleck (TR) auf der photosensiblen Fläche gebildet (31) wird,
- eine Integration (TTI) akkumulierter Ladungen in einem Abschnitt der photosensiblen Fläche (31), der dem jeweiligen Rückstreuungsfleck während mindestens einer Empfangsdauer des jeweiligen Rückstreuungsflecks (TR) durch den Sensor (3) ausgesetzt ist, wobei die Empfangsdauer zwischen den Sendungen von zwei aufeinanderfolgenden Impulsen des einfallenden Strahls inbegriffen ist,
- eine Erfassung eines jeweiligen Thumbnails (Im), das dem jeweiligen Rückstreuungsfleck entspricht, der aus der Sendung des Impulses in Abhängigkeit von den akkumulierten Ladungen resultiert, und
- eine Aufrechterhaltung einer Inaktivität (TIN) der photosensiblen Schicht während mindestens der Verbreitung jedes Impulses zwischen der Quelle (1) und der Beobachtungszone (ZO).

2. Verfahren nach Anspruch 1, wobei zwei erfasste Thumbnails (Im), die Rückstreuungsflecken (TR) entsprechen, geometrisch im Verhältnis zueinander versetzt sind.

3. Verfahren nach Anspruch 1 oder 2, das eine teilweise Überschneidung der Rückstreuungsflecken (TR) mindestens paarweise, eine teilweise Überschneidung der Thumbnails (Im) mindestens paarweise und eine Kombination mindestens von zwei benachbarten Thumbnails umfasst.

4. Verfahren nach einem der Ansprüche 1 bis 3, das eine Neuausrichtung mindestens von zwei benachbarten Thumbnails (Im) umfasst.

5. Verfahren nach einem der Ansprüche 1 bis 4, das aufeinanderfolgende Impulssendungen des einfallenden Strahls zu Abschnitten der Beobachtungszone (ZO), die nicht aneinander grenzen, umfasst, um Thumbnails (Im1, Im2) zu erfassen, die auf der photosensiblen Fläche (31) nicht aneinander grenzen.

6. Verfahren nach einem der Ansprüche 1 bis 5, das eine Sendung von Impulsen (IFI) des einfallenden Strahls, die zu Abschnitten der Beobachtungszone (ZO) abgelenkt werden, die sich zum Teil paarweise überschneiden und etwa eine Spirale beschreiben und die in jeweiligen Flecken (TR) zurückgestreut werden, die sich zum Teil paarweise überschneiden und etwa eine Spirale (SP) auf der photosensiblen Fläche (31) beschreiben, umfasst.

7. Verfahren nach einem der Ansprüche 1 bis 6, wobei Thumbnails (Im), die einer Unterzone der Beobachtungszone (ZO) entsprechen, mit einer Impulsfrequenz des einfallenden Strahls erfasst werden, die sich von der unterscheidet, mit der Thumbnails einer anderen Unterzone der Beobachtungszone (ZO) erfasst werden.

8. Verfahren nach einem der Ansprüche 1 bis 7, wobei zwei Thumbnails unterschiedliche Größen haben.

9. Verfahren nach einem der Ansprüche 1 bis 8, wobei ein Thumbnail eine spürbar größere Fläche als der entsprechende Rückstreuungsfleck bedeckt.

10. Verfahren nach einem der Ansprüche 1 bis 9, wobei die Schnitte des einfallenden Strahls (FI) für zwei Impulse (IFI) unterschiedlich sind.

11. Verfahren nach einem der Ansprüche 1 bis 10, wobei die je Impuls für zwei Impulse (IFI) gesendeten Energien unterschiedlich sind.

12. Verfahren nach einem der Ansprüche 1 bis 11, das eine Neuzentrierung von Rückstreuungsflecken auf Thumbnails oder eine Neuzentrierung von Thumbnails auf Rückstreuungsflecken umfasst.

13. Bildgebungssystem, das eine Impulslichtquelle (1), um Impulse eines einfallenden Strahls (FI) zu senden, der zu einer Beobachtungszone (ZO) gerichtet ist, und einen Optroniksensors (3) mit einer photosensiblen Fläche (31) mit einem Blickfeld, das imstande ist, etwa die Beobachtungszone abzudecken, umfasst, wobei das System für jeden Impuls des einfallenden Strahls, der imstande ist, nur von einem entsprechenden Abschnitt (PZO) der Beobachtungszone zurückgestreut zu werden, um einen Rückstreuungsfleck (TR) auf der photosensiblen Fläche (31) zu bilden, umfasst:
- ein Ablenkungsmittel (2), um den Impuls auf dem jeweiligen Abschnitt der Beobachtungszone abzulenken,
- ein Integrationsmittel (32, 4, TTI), um akkumulierter Ladungen in einem Abschnitt der photosensiblen Fläche (31), der dem jeweiligen Rückstreuungsfleck während mindestens einer Empfangsdauer des jeweiligen Rückstreuungsflecks (TR) durch den Sensor (3) ausgesetzt ist, zu integrieren, wobei die Empfangsdauer zwischen den Sendungen von zwei aufeinanderfolgenden Impulsen des einfallenden Strahls inbegriffen ist,
- ein Erfassungsmittel (32, 4, TL), um ein jeweiliges Thumbnail (Im), das dem jeweiligen Rückstreuungsfleck entspricht, der aus der Sendung des Impulses in Abhängigkeit von den akkumulierten Ladungen resultiert, zu erfassen, und
- ein Mittel, (32, 4, TIN), um die Inaktivität der photosensiblen Schicht während mindestens der Verbreitung jedes Impulses zwischen der Quelle (1) und der Beobachtungszone (ZO) aufrecht zu erhalten.

14. System nach Anspruch 13, wobei die Lichtquelle (1) ein Faserlaser ist.

15. System nach einem der Ansprüche 13 oder 14, wobei die Lichtquelle (1) eine Sendewellenlänge zwischen zirka 0,7 µm und zirka 3 µm inklusive hat.

16. Rechnerprogramm, das imstande ist, in einem Bildgebungssystem (SI) umgesetzt zu werden, das eine Impulslichtquelle (1), um Impulse eines einfallenden Strahls (FI) zu senden, der an eine Beobachtungszone (ZO) gesendet wird, und einen Optroniksensor (3) mit einer photosensiblen Fläche (31) mit einem Blickfeld, das imstande ist, etwa die Beobachtungszone abzudecken, umfasst, wobei das Programm Instruktionen umfasst, die, wenn das Programm in dem Bildgebungssystem ausgeführt wird, für jeden Impuls des einfallenden Strahls, der imstande ist, nur von einem entsprechenden Abschnitt (PZO) der Beobachtungszone zurückgestreut zu werden, um einen jeweiligen Rückstreuungsfleck (TR) auf der photosensiblen Fläche (31) zu bilden, zu steuern:
- eine Ablenkung des Impulses zu einem jeweiligen Abschnitt (PZO) der Beobachtungszone,
- eine Integration (TTI) akkumulierter Ladungen in einem Abschnitt der photosensiblen Fläche (31), der dem jeweiligen Rückstreuungsfleck während mindestens einer Empfangsdauer des jeweiligen Rückstreuungsflecks (TR) durch den Sensor (3) ausgesetzt ist, wobei die Empfangsdauer zwischen den Sendungen von zwei aufeinanderfolgenden Impulsen des einfallenden Strahls inbegriffen ist,
- eine Erfassung eines jeweiligen Thumbnails (Im), das dem jeweiligen Rückstreuungsfleck entspricht, der aus der Sendung des Impulses in Abhängigkeit von den akkumulierten Ladungen resultiert, und
- eine Inaktivität (TIN) der photosensiblen Schicht während mindestens der Verbreitung jedes Impulses zwischen der Quelle (1) und der Beobachtungszone (ZO).

## Claims

1. An imaging method wherein pulses of an incident beam (FI) are emitted by a pulsed light source (1) towards an observed area (ZO) covered substantially by the view field of the photosensitive surface area (31) of an optronic sensor (3), the method comprising for each pulse of the incident beam:
- a deflexion of the pulse towards a respective portion (PZO) of the observed area,
- a backscatter of the pulse by the respective portion of the observed area, forming a respective backscatter spot (TR) on the photosensitive surface area (31),
- an integration (TTI) of charges accumulated in a portion of the photosensitive surface area (31) exposed to the respective backscatter spot during at least a duration of reception of the respective backscatter spot (TR) by the sensor (3), said duration of reception being comprised between the emissions of two successive pulses of the incident beam,
- an acquisition of a respective small-sized image (Im) corresponding to said respective backscatter spot of the pulse as a function of the accumulated charges, and
- a maintenance of an inactivity (TIN) of the photosensitive surface area during at least the diffusion of each pulse between the source (1) and the observed area (ZO).

2. The method according to claim 1, wherein two acquired small-sized images (Im) corresponding to backscatter spots (TR) are geometrically offset from each other.

3. The method according to claim 1 or 2, including a partial overlap of the backscatter spots (TR) at least two to two, a partial overlap of small-sized images (Im) at least two to two and a combination at least two adjacent small-sized images.

4. The method according to any of claims 1 to 3, including an alignment at least of two adjacent small-sized images.

5. The method according to any of claims 1 to 4, including emitting consecutive pulses of the incident beam towards portions of the observed area (ZO) that are not contiguous to produce small-sized images (Im1, Im2) that are not contiguous on the photosensitive surface area (31).

6. The method according to any of claims 1 to 5, including emitting pulses (IFI) of the incident beam that are deflected towards portions of the observed area (ZO) partially overlapping two to two and substantially following a spiral, and that are backscattered into corresponding spots (TR) partially overlapping two to two and substantially following a spiral (SP) on the photosensitive surface area (31).

7. The method according to any of claims 1 to 6, wherein small-sized images (Im) corresponding to a sub-area of the observed area (ZO) are acquired with a frequency of incident beam pulses different from that for small-sized images of another sub-area of the observed area (ZO).

8. The method according to any of claims 1 to 7, wherein two small-sized images have different sizes.

9. The method according to any claims 1 to 8, wherein a small-sized image covers a substantially larger surface than the corresponding backscatter spot.

10. The method according to any of claims 1 to 9, wherein the sections of the incident beam (FI) for two pulses (IFI) are different.

11. The method according to any of claims 1 to 10, wherein the energies emitted per pulse for two pulses (IFI) are different.

12. The method according to any claims 1 to 11, including re-centering backscatter spots on small-sized images, or re-centering small-sized images on backscatter spots.

13. An imaging system including a pulsed light source (1) for emitting an incident beam (FI) oriented towards an observed area (ZO) and an optronic sensor (3) having a photosensitive surface area (31) with a view field able to substantially cover the observed area, the system comprising for each pulse of the incident beam able to be backscattered only by a respective portion (PZO) of the observed area for forming a respective backscatter portion (TR) on the photosensitive surface area (31):
- deflexion means (2) for deflecting the pulse towards a respective portion (PZO) of the observed area,
- integration means (32, 4, TTI) for integrating the charges accumulated in a portion of the photosensitive surface area (31) exposed to the respective backscatter spot during at least a duration of reception of the respective backscatter spot (TR) by the sensor (3), said duration of reception being comprised between the emissions of two successive pulses of the incident beam,
- acquisition means (32, 4, TL) for acquiring a respective small-sized image (Im) corresponding to said respective backscatter spot of the pulse as a function of the accumulated charges, and
- maintenance means (32, 4, TIN) for maintaining an inactivity of the photosensitive surface area during at least the diffusion of each pulse between the source (1) and the observed area (ZO).

14. The system of claim 13, wherein the light source (1) is a fiber laser.

15. The system of one of claims 13 or 14, wherein the light source (1) has a emission wavelength comprised between about 0,7 µm and about 3 µm.

16. Computer program able to be carried out in an image system (SI) comprising a pulse light source (1) for emitting pulses of an incident beam (FI) directed towards an observed area (20) and an optronic sensor (3) having a photosensitive area (31) with a view field able to substantially cover the observed area, said program comprising instructions which, when the program is executed in the image system (SI), control for each pulse of the incident beam able to be backscatter only by a respective portion (PZO) of the observed area for forming a respective backscatter spot (TR) on the photosensitive area (31):
- a deflexion of the pulse towards a respective portion (PZO) of the observed area,
- an integration (TTI) of charges accumulated in a portion of the photosensitive surface area (31) exposed to the respective backscatter spot during at least a duration of reception of the respective backscatter spot (TR) by the sensor (3), said duration of reception being comprised between the emissions of two successive pulses of the incident beam,
- an acquisition of a respective small-sized image (Im) corresponding to said respective backscatter spot of the pulse as a function of the accumulated charges, and
- an inactivity (TIN) of the photosensitive surface area during at least the diffusion of each pulse between the source (1) and the observed area (ZO).
